# EUROPEAN PATENT SPECIFICATION

(11) **EP 1 459 403 B1**
(45) Date of publication and mention of the grant of the patent: **08.06.2005**
(21) Application number: 02779924.6
(22) Date of filing: 28.10.2002
(51) Int. Cl.: H01M 8/02, H01M 8/24

(54) **FUEL CELL STACK WITH DIFFERENT ANODE AND CATHODE SEPARATOR PLATES**
BRENNSTOFFZELLENSTAPEL MIT UNTERSCHIEDLICHEN ANODEN- UND KATHODENSEITIGEN SEPARATORPLATTEN
PILE A COMBUSTIBLE A PLAQUES DE SEPARATION ANODIQUE ET CATHODIQUE DIFFERENTES

(30) Priority: 21.12.2001 JP 2001389166
(43) Date of publication of application: 22.09.2004
(73) Proprietor: NISSAN MOTOR COMPANY, LIMITED, Yokohama-shi, Kanagawa 221-0023 (JP)
(72) Inventor: MIYAZAWA, Atsushi, Yokosuka-shi, Kanagawa 238-0023 (JP); AOKI, Osamu, Shinjuku-ku, Tokyo 160-0022 (JP)
(74) Representative: Schaeberle, Steffen
(86) International application number: PCT/JP2002/011130
(87) International publication number: WO 2003/056647

(56) References cited:
- EP-A- 0 940 868
- EP-A- 1 094 534
- GB-A- 2 348 047

## Description

### FIELD OF THE INVENTION

This invention relates to the gas separator plates of fuel cells which constitute a fuel cell stack.

### BACKGROUND OF THE INVENTION

A fuel cell of a polymer electrolyte fuel cell (PEFC) comprises a membrane electrode assembly (MEA) in which an anode membrane and a cathode membrane are pressure bonded onto the two faces of a solid polymer electrolyte, an anode gas separator plate formed with a channel for supplying hydrogen to an anode, and a cathode gas separator plate formed with a channel for supplying oxygen to a cathode. In a fuel cell stack serving as a single power generator unit, a stacked body constituted by a large number of such fuel cells is gripped between current collectors, insulators and end plates, and constricted in a compressive direction by tie rods.

However, constricting the stacked body of fuel cells by means of tie rods may cause the gas separator plates to fissure and break.

In this context, Tokkai 2001-68128 and Tokkai 2001-189160 published by the Japanese Patent Office in 2001 disclose technology for increasing the strength of gas separator plates. The former proposes constituting the gas separator plates from an amorphous carbon material. The latter proposes constituting the gas separator plates from a carbon composite containing fiber reinforcements.

### SUMMARY OF THE INVENTION

The strength of the gas separator plates is enhanced when either of the materials in these prior art examples is used, and hence the prior art exhibits favorable results as concerns the prevention of fissures and breakages. However, these gas separator plates have high resin and high fiber reinforcement contents, and as a result, a reduction in electrical conductivity in comparison with gas separator plates which do not contain resin or fiber reinforcements is unavoidable. When the gas separator plates have low conductivity, the power generating performance of the fuel cell may deteriorate.

It is therefore an object of this invention to prevent fissures and breakage in the gas separator plates during the stacking of fuel cells without causing a deterioration in the electrical conductivity of the gas separator plates.

In order to achieve the above object, this invention provides a fuel cell stack comprising a plurality of stacked fuel cells. Each fuel cell comprises a membrane electrode assembly in which a solid polymer electrolyte is gripped between an anode membrane and a cathode membrane, an anode gas separator plate provided with an anode gas channel facing the anode membrane, and a cathode gas separator plate provided with a cathode gas channel facing the cathode membrane.

The anode gas separator plate and the cathode gas separator plate are set to have a different characteristic with respect to either flexural strength or flexural modulus, and the fuel cells are stacked such that the anode gas separator plate of a fuel cell is in contact with the cathode gas separator plate of an adjacent fuel cell.

The details as well as other features and advantages of this invention are set forth in the remainder of the specification and are shown in the accompanying drawings.

### BRIEF DESCRIPTION OF THE DRAWINGS

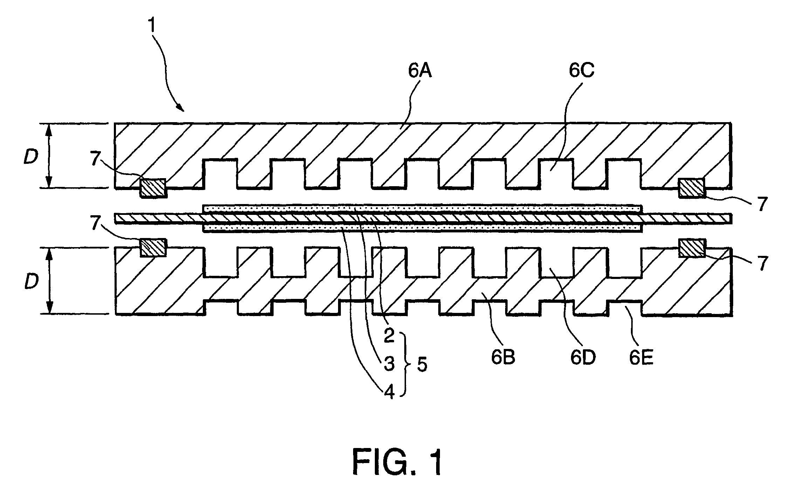

FIG. 1 is a split transverse cross-sectional view of a fuel cell according to this invention.

### DESCRIPTION OF THE PREFERRED EMBODIMENTS

Referring to FIG. 1 of the drawing, a fuel cell 1 comprises an MEA 5, an anode gas separator plate 6A and a cathode gas separator plate 6B.

The MEA 5 comprises a solid polymer electrolyte 2 and an anode membrane 3 and cathode membrane 4 which are pressure bonded onto the two surfaces of the solid polymer electrolyte 2.

The anode gas separator plate 6A and cathode gas separator plate 6B are disposed facing to each other so as to sandwich the MEA 5. Gaskets 7 formed from insulating material are gripped between the anode gas separator plate 6A and solid polymer electrolyte 2, and the cathode gas separator plate 6B and solid polymer electrolyte 2, respectively. It should be noted that FIG. 1 is a split view, and that in reality the gaskets 7 contact the solid polymer electrolyte 2.

Grooves 6C are formed at equal intervals in the anode gas separator plate 6A facing the MEA 5. Similar grooves 6D are formed in the cathode gas separator plate 6B. The grooves 6C form a channel for anode gas which has hydrogen as its main component. The grooves 6D form a channel for cathode gas which has oxygen as its main component. The gaskets 7 which are gripped between the anode gas separator plate 6A and the solid polymer electrolyte 2 function to prevent anode gas from leaking out of the anode gas channel. The gaskets 7 which are gripped between the cathode gas separator plate 6B and the solid polymer electrolyte 2 function to prevent cathode gas from leaking out of the cathode gas channel.

The gaskets 7 may be omitted, thereby causing one part of the anode gas separator plate 6A to contact the solid polymer electrolyte 2 directly and one part of the cathode gas separator plate 6B to contact the solid polymer electrolyte 2 directly. The elasticity of the solid polymer electrolyte 2 may then be used to seal in the anode gas and cathode gas.

Grooves 6E are formed in the cathode gas separator plate 6B back to back with the grooves 6D. A large number of the fuel cells 1 thus constructed are stacked in the horizontal direction of the drawing. A current collector, insulator, and end plate, not shown, are attached to each end of the stacked fuel cells 1. The end plates on the two ends are then constricted by an appropriate load in a proximal direction using tie rods thereby forming an integrated fuel cell stack.

In this fuel cell stack formation, the cathode gas separator plate 6B formed with the grooves 6E adheres to the anode gas separator plate 6A of an adjacent fuel cell 1 such that the grooves 6E form a hermetically sealed cooling water channel. The cooling water channel functions to stabilize the operating temperature of the fuel cell stack. It is however still possible to omit the cooling water channel.

The anode gas separator plate 6A and cathode gas separator plate 6B differ in characteristic with respect to at least one of flexural strength and flexural modulus.

That is, the flexural strength of the anode gas separator plate 6A is set to be relatively higher or lower than the flexural strength of the cathode gas separator plate 6B. Alternatively, the flexural modulus of the anode gas separator plate 6A is set to be relatively higher or lower than the flexural modulus of the cathode gas separator plate 6B. Furthermore, the anode gas separator plate 6A and cathode gas separator plate 6B may be constituted from different components in view of both flexural strength and flexural modulus.

The difference in flexural strength between the anode gas separator plate 6A and cathode gas separator plate 6B is set within a range of greater than zero and not more than 180 megapascals (MPa). The difference in flexural modulus between then anode gas separator plate 6A and cathode gas separator plate 6B is set within a range of greater than zero and not more than 35 gigapascals (GPa).

In order to explain in greater detail, one of the anode gas separator plate 6A and cathode gas separator plate 6B is assumed to be a gas separator plate A while the other is assumed to be a gas separator plate B.

If the flexural strength of the gas separator plate A is set to be larger than that of the gas separator plate B and the flexural modulus of the gas separator plate A is set to be smaller than that of the gas separator plate B, the gas separator plate A has greater strength and flexibility. If the flexural strength of the gas separator plate A is set to be larger than that of the gas separator plate B and the flexural modulus of the gas separator plate A is set to be larger than that of the gas separator plate B, the gas separator plate A has greater strength and the gas separator plate B has greater flexibility. When the flexural strength and flexural modulus of gas separator plates which are adjacent in the stacking direction are varied in such a manner, the probability that fissures and breakages will occur in the gas separator plates upon constriction of the stacked fuel cell 1 using tie rods decreases in comparison with a case in which homogeneous gas separator plates are stacked.

In this embodiment, two types of gas separator plate i.e., the anode gas separator plate 6A and the cathode gas separator plate 6B, are alternately disposed. Even in a fuel cell stack using three or more types of gas separator plate, however, the same effect as in the case of this embodiment may be achieved as long as the flexural strength or flexural modulus of gas separator plates which are adjacent in the stacking direction differs.

Gas separator plates having such physical characteristic differences as those described above may be obtained by means of the following manufacturing method.

Gas separator plates having different flexural strength or different flexural modulus as described above may be manufactured by constructing gas separator plates using a graphite composite containing graphite particles and resin and varying the type of graphite particles and resin. A gas separator plate constructed in this manner attains a higher conductivity than the gas separator plate described in the aforementioned Tokkai 2001-68128 and Tokkai 2001-189160, which is manufactured using fiber reinforced plastics (FRP) made from fiber reinforcements such as glass fiber or carbon fiber.

If an expanded graphite material with a typical average particle diameter of 0.5 millimeters (mm) or less is used as the graphite, the flexural modulus of the gas separator plate becomes lower than cases in which other graphite materials are used, and thus flexibility is increased. The flexural strength of the gas separator plate increases in accordance with increases in the resin content, as does the flexural modulus, thereby causing a reduction in flexibility. Note, however, that there is a limit to flexural strength increases caused by increases in resin content.

Both the flexural modulus and flexural strength can be caused to increase by using bulk synthetic graphite as the graphite, or by using a material in which graphite has been impregnated with resin, or by using vitrified carbon. The flexural strength of the gas separator plate can also be greatly increased by adding an appropriate amount of fiber reinforcements.

In order to further increase the difference in both flexural strength and flexural modulus between the two gas separator plates, it is preferable to construct one of the gas separator plates from an expanded graphite material with a low flexural modulus, and to construct the other gas separator plate from a vitrified carbon or synthetic graphite material in which both flexural strength and flexural modulus are high.

As for the resin to be used in the graphite composite, an acid-resistant, heat-resistant, and hydrolysis-resistant resin which can withstand the operating environment of the fuel cell stack is favorable. A resin having one of either a thermoplastic or thermosetting characteristic may be used.

The construction material of the gas separator plate is not limited to a graphite composite. The gas separator plate may also be constructed from an acid-resistant metal such as titanium. Moreover, stainless steel or aluminum alloys may also be used as the construction material of the gas separator plate by coating the part of the gas separator plate which comes into contact with gas with a corrosion-resistant material while coating the part of the gas separator plate which come into contact with the MEA 5 with a precious metal so as to decrease the contact resistance. A metallic gas separator plate constructed in this fashion may either be stacked alternately with another metallic gas separator plate having differing physical characteristics, or may be stacked alternately with a gas separator plate manufactured from a graphite composite.

When constricting the gas separator plates as well as the gaskets and MEAs with the tie rod, pressure may be locally concentrated due to stacking irregularities. "Stacking irregularities" signifies irregularities in the formation precision such as warping or nonuniformity in the thickness of the gas separator plates, or stacking errors occurring during stacking in one part of the gaskets 7 or the MEAs 5. Due to their flexible characteristic, the gas separator plates alter form in response to such stacking irregularities, whereby the localized pressure concentration is relieved and the occurrence of breakages or fissures in the gas separator plates is prevented. An environment in which gas or cooling water leakages are unlikely to occur may also be obtained.

Furthermore, when stacking the fuel cells 1, a gas separator plate with a low flexural strength or flexural modulus changes shape flexibly in accordance with the gas separator plates positioned on either side thereof, and as a result, damage to the gas separator plate or gas leaks can be prevented. Thus, there is no need to provide a particular component in the fuel cell stack in order to prevent damage to the gas separator plate or gas leaks, meaning that construction of the fuel cell stack can be simplified.

When a gas separator plate is constituted by a composite material having graphite particles and resin as the main components thereof, differences arise in the thermal conductivity of the gas separator plates due to the disparities in composition. In such a case, it is preferable to dispose a gas separator plate with high thermal conductivity as the cathode gas separator plate 6B having a higher temperature sensitivity than the anode gas separator plate 6A. Since the cathode 4 has a high current density and great heat generation, the grooves 6E are provided in the cathode gas separator plate 6B to form a cooling water channel. Accordingly, by raising the thermal conductivity of the cathode gas separator plate 6B, the cooling effect of the cooling water flowing through the grooves 6E may be heightened. Further, upon power generation by the fuel cell 1, the solid polymer electrolyte must be maintained in a humid condition. In order to ensure the humid condition, the temperature of the fuel cell 1 must be precisely controlled. Raising the thermal conductivity of the cathode gas separator plate 6B provided with a cooling water channel simplifies the temperature management of the fuel cell 1.

Next, a manufacturing method for the gas separator plates A and B as mentioned hereintofore, and the results of an experiment conducted by the inventors concerning the strength of a fuel cell stack constructed using the manufactured gas separator plates A and B will be described.

First, both of the gas separator plates A and B were formed by dry blending 100 parts by weight of graphite particles with 17.6 parts by weight of phenol resin and 0.6 parts by weight of internal mold lubricant and pressing this mixture to mold a plate with surface dimensions of 300mm x 250mm and a thickness of 1mm. The gas separator plates each comprise an anode gas channel or cathode gas channel provided with an inlet and outlet to connect the gas channel with an intake manifold and a discharge manifold of the corresponding gas respectively.

The gas separator plates A and B have the following differences.

The gas separator plate A uses synthetic graphite particles with an average particle diameter of 60mm as graphite particles and is fired following molding to achieve a flexural strength of 95MPa and a flexural modulus of 28GPa as physical characteristics.

The gas separator plate B uses expanded graphite particles with an average particle diameter of 120µm as graphite particles and undergoes heat treatment to promote complete curing of the phenol resin, thereby achieving a flexural strength of 38Mpa and a flexural modulus of 8GPa as physical characteristics.

Table-1 shows the flexural strength (MPa), flexural modulus (GPa), and precision (± µm) of the thickness *D* of the gas separator plate A and gas separator plate B. The flexural strength and flexural modulus were measured according to standard JIS K7171 "Plastics - Determination of Flexural Properties".

**Table-1**

| SEPARATOR PLATE | FLEXURAL STRENGTH (MPa) | FLEXURAL MODULUS (GPa) | PRECISION OF THICKNESS (± µm) |
|---|---|---|---|
| A | 95 | 28 | 10 |
| B | 38 | 8 | 60 |

Next, fuel cells using the gas separator plate A and gas separator plate B were stacked to construct a fuel cell stack. That is, a current collector, insulator, and end plate were superposed onto each end of the stacked fuel cells in the stacking direction and then constricted in the stacking direction using tie rods so as to obtain a fuel cell stack.

Each of the current collector and insulator was constructed with surface dimensions of 300mm x 250mm and a thickness of 1mm, whereas the end plate was constructed with surface dimensions of 300mm x 250mm and a thickness of 20mm.

### Example #1

A fuel cell in which an MEA is gripped between the gas separator plate A and gas separator plate B was constructed, and fifty fuel cells were stacked such that the gas separator plate A contacted the gas separator plate B of the adjacent fuel cell. A current collector, insulator and end plate were superposed onto each end of the stacked fuel cells as described above, whereupon the end plates on the two ends were constricted at a contact pressure of 0.5MPa using tie rods so as to obtain a fuel cell stack. Another fuel cell stack was obtained using the same method and by constricting the end plates on the two ends at a contact pressure of 1MPa.

### Comparative Sample #1

The anode gas separator plate and cathode gas separator plate of a fuel cell were both constructed as the gas separator plate A. Fifty fuel cells constructed in this manner were stacked as in Example #1 and, applying the same process as in Example #1, a fuel cell stack constricted at a contact pressure of 0.5MPa and a fuel cell stack constricted at a contact pressure of 1MPa were obtained.

### Comparative Sample #2

The anode gas separator plate and cathode gas separator plate of a fuel cell were both constructed as the gas separator plate B. Fifty fuel cells constructed in this manner were stacked as in Example #1 and, applying the same process as in Example #1, a fuel cell stack constricted at a contact pressure of 0.5MPa and a fuel cell stack constricted at a contact pressure of 1MPa were obtained.

Hydrogen containing fuel gas was supplied into the manifold of the anode gas separator plates and oxygen containing oxidizing gas was supplied into the manifold of the cathode gas separator plates in each of the six types of fuel cell stack manufactured in Example #1, Comparative Sample #1, and Comparative Sample #2. Gas leaks from the outer periphery of the stacks were then detected using a gas detector. Cooling liquid was also supplied to the cooling channel of each stack, and checks were made for cooling liquid leakage.

Following the leakage detection tests, each fuel cell stack was dismantled and visual checks were performed for damage to the gas separator plates. The dismantled fuel cell stacks were then reassembled and the aforementioned leakage detection tests were performed. These leakage detection tests and visual gas separator plate damage checks were each performed five times for each of the six types of fuel cell stack.

Table-2 illustrates the results of the above experiment. The numerals in the table indicate the number of locations where a gas or cooling liquid leak was detected, or the number of locations of damage to the gas separator plates.

**Table-2**

| ITEM | SEPARATOR PLATES | CONTACT PRESSURE 0.5 MPa | | CONTACT PRESSURE 1.0 MPa | |
|---|---|---|---|---|---|
| | | PLATE DAMAGE | GAS LEAK | PLATE DAMAGE | GAS LEAK |
| EXAMPLE #1 | A-B | NONE | NONE | NONE | NONE |
| COMPRATIVE SAMPLE #1 | A-A | NONE | ONE TO THREE | ONE TO THREE | FOUR OR MORE |
| COMPRATIVE SAMPLE #2 | B-B | NONE | ONE TO THREE | NONE | ONE TO THREE |

According to the results of the experiment concerning Example #1, in which a gas separator plate A and a gas separator plate B with differing physical characteristics were combined, no gas or cooling liquid leaks and no damage to the gas separator plates whatsoever could be found when contact pressure of either 0.5MPa or 1.0MPa was applied.

As for Comparative Sample #1, no damage occurred to the gas separator plates when contact pressure of 0.5MPa was applied, but gas or cooling liquid leaks were discovered in one to three locations. Under contact pressure of 1.0MPa, gas separator plate damage was discovered in one to three locations and gas or cooling liquid leaks were discovered in four or more locations.

In Comparative Sample #2, no gas separator plate damage was discovered under contact pressure of either 0.5MPa or 1.0MPa, but gas and cooling liquid leaks were discovered in one to three locations each under both contact pressures.

Although the invention has been described above by reference to certain embodiments of the invention, the invention is not limited to the embodiments described above. Modifications and variations of the embodiments described above will occur to those skilled in the art, in light of the above teachings.

### INDUSTRIAL FIELD OF APPLICATION

As mentioned above, by using a combination of separator plates of different flexural strength or flexural modulus, the fuel cell stack according to this invention can absorb warping or nonuniformity in the separator plates when the stacked fuel cells are constricted in the stacking direction. This invention is preferably applied to fuel cell stacks made of polymer electrolyte fuel cells in order to prevent damage to the separator plates as well as to prevent gas or cooling water leaks without affecting the electrical conductivity of the separator plates.

The embodiments of this invention in which an exclusive property or privilege is claimed are defined as follows:

## Claims

1. A fuel cell stack comprising:
a plurality of stacked fuel cells (1), each fuel cell (1) comprising a membrane electrode assembly (5) in which a solid polymer electrolyte (2) is gripped between an anode membrane (3) and a cathode membrane (4), an anode gas separator plate (6A) provided with an anode gas channel (6C) facing the anode membrane (3), and a cathode gas separator plate (6B) provided with a cathode gas channel (6D) facing the cathode membrane (4), the anode gas separator plate (6A) and the cathode gas separator plate (6B) having a different characteristic with respect to either flexural strength or flexural modulus, and the fuel cells (1) being stacked such that the anode gas separator plate (6A) of a fuel cell (1) is in contact with the cathode gas separator plate (6B) of an adjacent fuel cell (1).

2. The fuel cell stack as defined in Claim 1, wherein the anode gas separator plate (6A) and the cathode gas separator plate (6B) are constructed from a composite material containing graphite particles and resin.

3. The fuel cell stack as defined in Claim 1 or Claim 2, wherein one of the anode gas separator plate (6A) and the cathode gas separator plate (6B) has a larger flexural strength and a smaller flexural modulus than the other.

4. The fuel cell stack as defined in Claim 1 or Claim 2, wherein one of the anode gas separator plate (6A) and the cathode gas separator plate (6B) has a larger flexural strength and a larger flexural modulus than the other.

5. The fuel cell stack as defined in Claim 1, wherein the difference in flexural strength between the anode gas separator plate (6A) and the cathode gas separator plate (6B) is set at 180 megapascals or less, and the difference in flexural modulus between the anode gas separator plate (6A) and the cathode gas separator plate (6B) is set at 35 gigapascals or less.

6. The fuel cell stack as defined in Claim 1, wherein the cathode gas separator plate (6B) has a higher thermal conductivity than the anode gas separator plate (6A).

7. The fuel cell stack as defined in Claim 1, wherein the cathode gas separator plate (6B) comprises a cooling water channel (6E).

## Patentansprüche

1. Brennstoffzellen-Stapel, der aufweist:
eine Mehrzahl von gestapelten Brennstoffzellen (1), wobei jede Brennstoffzelle (1) eine Membran-Elektroden-Baugruppe (5) aufweist, in der ein fester Polymer-Elektrolyt (2) zwischen einer Anoden-Membran (3) und einer Kathoden-Membran (4) gepackt ist, eine Anoden-Gas-Trennplatte (6A), die mit einem Anoden-Gas-Durchgang (6C) versehen ist, der der Anoden-Membran (3) zugewandt ist und eine Kathoden-Gas-Trennplatte (6B), die mit einem Kathoden-Gas-Durchgang (6D) versehen ist, der der Kathoden-Membran (4) zugewandt ist, wobei die Anoden-Gas-Trennplatte (6A) und die Kathoden-Gas-Trennplatte (6B) eine unterschiedliche Eigenschaft hinsichtlich ihrer Biegefestigkeit als auch ihres Biegemoduls aufweisen und die Brennstoffzellen (1) so gestapelt sind, dass die Anoden-Gas-Trennplatte (6A) einer Brennstoffzelle (1) in Kontakt mit der Kathoden-Gas-Trennplatte (6B) einer benachbarten Brennstoffzelle (1) steht.

2. Brennstoffzellen-Stapel nach Anspruch 1, wobei die Anoden-Gas-Trennplatte (6A) und die Kathoden-Gas-Trennplatte (6B) aus einem Verbundmaterial bestehen, das Graphit-Partikel und Harz enthält.

3. Brennstoffzellen-Stapel nach Anspruch 1 oder Anspruch 2, wobei die Anoden-Gas-Trennplatte (6A) oder die Kathoden-Gas-Trennplatte (6B) eine größere Biegefestigkeit und einen kleineren Biegemodul als die andere aufweist.

4. Brennstoffzellen-Stapel nach Anspruch 1 oder Anspruch 2, wobei die Anoden-Gas-Trennplatte (6A) und die Kathoden-Gas-Trennplatte (6B) eine größere Biegefestigkeit und einen größeren Biegemodul als die andere aufweist.

5. Brennstoffzellen-Stapel nach Anspruch 1, wobei die Differenz an Biegefestigkeit zwischen der Anoden-Gas-Trennplatte (6A) und der Kathoden-Gas-Trennplatte (6B) auf 180 Megapascal oder weniger festgelegt ist und die Differenz im Biegemodul zwischen der Anode-Gas-Trennplatte (6A) und der Kathode-Gas-Trennplatte (6B) auf 35 Gigapascal oder weniger festgelegt ist.

6. Brennstoffzellen-Stapel nach Anspruch 1, wobei die Kathoden-Gas-Trennplatte (6B) eine höhere Wärmeleitfähigkeit als die Anoden-Gas-Trennplatte (6A) aufweist.

7. Brennstoffzellen-Stapel nach Anspruch 1, wobei die Kathoden-Gas-Trennplatte (6B) einen Kühlwasser-Durchlass (6E) aufweist.

## Revendications

1. Empilement de piles à combustible comprenant :
une pluralité de piles à combustible (1) empilées, chaque pile à combustible (1) comprenant un ensemble formant électrode à membrane (5) dans lequel un électrolyte de polymère solide (2) est maintenu entre une membrane anodique (3) et une membrane cathodique (4), une plaque anodique de séparation de gaz (6A) et son canal anodique de gaz (6C) faisant face à la membrane anodique (3), et une plaque cathodique de séparation de gaz (6B) et son canal cathodique de gaz (6D) faisant face à la membrane cathodique (4), la plaque anodique de séparation de gaz (6A) et la plaque cathodique de séparation de gaz (6B) présentant une résistance à la flexion ou un module d'élasticité à la flexion différents, et les piles à combustible (1) étant empilées de telle sorte que la plaque anodique de séparation de gaz (6A) d'une pile à combustible (1) soit en contact avec la plaque cathodique de séparation de gaz (6B) d'une pile à combustible (1) adjacente.

2. Empilement de piles à combustible selon la revendication 1, dans lequel la plaque anodique de séparation de gaz (6A) et la plaque cathodique de séparation de gaz (6B) sont construites dans un matériau composite contenant des particules de graphite et de la résine.

3. Empilement de piles à combustible selon la revendication 1 ou la revendication 2, dans lequel la plaque anodique de séparation de gaz (6A) ou la plaque cathodique de séparation de gaz (6B) présente une résistance à la flexion plus élevée et un module d'élasticité à la flexion moins élevé que l'autre.

4. Empilement de piles à combustible selon la revendication 1 ou la revendication 2, dans lequel la plaque anodique de séparation de gaz (6A) ou la plaque cathodique de séparation de gaz (6B) présente une résistance à la flexion plus élevée et un module d'élasticité à la flexion plus élevé que l'autre.

5. Empilement de piles à combustible selon la revendication 1, dans lequel la différence de résistance à la flexion entre la plaque anodique de séparation de gaz (6A) et la plaque cathodique de séparation de gaz (6B) est réglée à 180 mégapascals ou moins, et la différence de module d'élasticité à la flexion, entre la plaque anodique de séparation de gaz (6A) et la plaque cathodique de séparation de gaz (6B) est réglée à 35 gigapascals ou moins.

6. Empilement de piles à combustible selon la revendication 1, dans lequel la plaque cathodique de séparation de gaz (6B) présente une conductivité thermique plus élevée que la plaque anodique de séparation de gaz (6A).

7. Empilement de piles à combustible selon la revendication 1, dans lequel la plaque cathodique de séparation de gaz (6B) comprend un canal à eau de refroidissement (6E).
